# EUROPEAN PATENT APPLICATION

(11) **EP 4 691 812 A1**
(43) Date of publication of application: **11.02.2026**
(21) Application number: 23929821.9
(22) Date of filing: 12.09.2023
(51) Int. Cl.: B60G 17/04, B60N 2/52, B60G 17/015, B60C 23/16

(54) **INTEGRATED ADJUSTMENT SYSTEM AND VEHICLE**

(30) Priority: 31.03.2023 CN 202310362996
(71) Applicant: BYD Company Limited, Shenzhen, Guangdong 518118 (CN)
(72) Inventor: GUAN, Zhuohui, Shenzhen, Guangdong 518118 (CN); LIAO, Yinsheng, Shenzhen, Guangdong 518118 (CN); ZHANG, Hongzhou, Shenzhen, Guangdong 518118 (CN); ZHANG, Feng, Shenzhen, Guangdong 518118 (CN); CHEN, Jinying, Shenzhen, Guangdong 518118 (CN)
(74) Representative: Mathys & Squire
(86) International application number: PCT/CN2023/118361
(87) International publication number: WO 2024/198247

(57) **Abstract**

Provided are an integrated adjustment system and a vehicle. The system is applied to a vehicle. The integrated adjustment system includes: a first air-receiving apparatus and a second air-receiving apparatus, where the first air-receiving apparatus is configured to achieve a first function, the second air-receiving apparatus is configured to achieve a second function, and the first function is different from the second function; and an air storage apparatus (8), where the air storage apparatus (8) is connected to the first air-receiving apparatus to supply air to the first air-receiving apparatus, and the air storage apparatus (8) is connected to the second air-receiving apparatus to supply air to the second air-receiving apparatus. This significantly reduces a total volume of the integrated adjustment system, saves interior space of the vehicle, and reduces costs of the vehicle.

## Description

### CROSS-REFERENCE TO RELATED APPLICATIONS

This application claims priority to Chinese Patent Application No. "202310362996.X", filed by BYD Company Limited on March 31, 2023 and entitled "INTEGRATED ADJUSTMENT SYSTEM AND VEHICLE".

### TECHNICAL FIELD

This application relates to the technical field of vehicle adjustment, and in particular, to an integrated adjustment system and a vehicle.

### BACKGROUND

In the related art, vehicle seats can be adjusted to accommodate different passengers. The height of a suspension system of a vehicle is adjusted by setting an air suspension. However, seat adjustment systems and air suspensions have complex structures and occupy large amounts of space inside a vehicle.

### SUMMARY

This application is intended to solve one of the technical problems in the related art at least to some extent.

According to a first aspect of this application, an integrated adjustment system is provided.

An integrated adjustment system is applied to a vehicle. The integrated adjustment system includes: a first air-receiving apparatus and a second air-receiving apparatus, where the first air-receiving apparatus is configured to achieve a first function, the second air-receiving apparatus is configured to achieve a second function, and the first function is different from the second function; and an air storage apparatus, where the air storage apparatus is connected to the first air-receiving apparatus to supply air to the first air-receiving apparatus, and the air storage apparatus is connected to the second air-receiving apparatus to supply air to the second air-receiving apparatus.

According to a second aspect of this application, a vehicle is provided. The vehicle includes the integrated adjustment system described above.

According to a third aspect of this application, a vehicle is provided. The vehicle includes the integrated adjustment system described above, where the second pipeline is provided with a first pressure-limiting valve, the seat adjustment apparatus includes an airbag, the airbag is located behind a side wing of the seat, the airbag is connected to the second pipeline, the second pipeline is provided with a first valve and a second valve, the first valve is configured to control air intake of the airbag, and the second valve is configured to control air exhaust of the airbag; and the first pressure-limiting valve and the first valve are configured to be turned on when a signal that a vehicle is turning is obtained, in order to inflate the airbag behind the side wing on a tilted side.

In this way, the first air-receiving apparatus and the second air-receiving apparatus share an air storage apparatus, which significantly reduces the total volume of the integrated adjustment system, saves interior space of the vehicle, and reduces costs of the vehicle.

Additional aspects and advantages of this application will be partially set forth in the following description, and will partially become apparent from the following description, or may be learned from practice of this application.

### BRIEF DESCRIPTION OF THE DRAWINGS

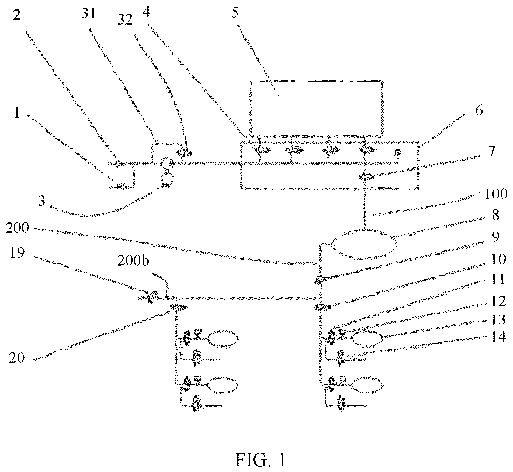

FIG. 1 is a schematic diagram of an integrated adjustment system according to an embodiment of this application.

### DETAILED DESCRIPTION

Embodiments of the present disclosure will be described in detail below, in which examples of the embodiments are illustrated in the drawings. Throughout the drawings, the same or similar reference numerals denote the same or similar elements, or elements having the same or similar functions. The embodiments described below with reference to the drawings are exemplary and are intended to explain the present disclosure, but should not be construed as limiting the present disclosure.

According to an embodiment of this application, an integrated adjustment system is provided, which is applied to a vehicle. The system includes:
a first air-receiving apparatus and a second air-receiving apparatus, where the first air-receiving apparatus is configured to achieve a first function, the second air-receiving apparatus is configured to achieve a second function, and the first function is different from the second function; and
an air storage apparatus 8, where the air storage apparatus 8 is connected to the first air-receiving apparatus to supply air to the first air-receiving apparatus, and the air storage apparatus 8 is connected to the second air-receiving apparatus to supply air to the second air-receiving apparatus.

The air storage apparatus 8 is configured to store and supply air. The air is, for example, nitrogen, compressed air, inert gas, and the like. The first air-receiving apparatus and the second air-receiving apparatus are apparatuses receiving air. The first air-receiving apparatus utilizes air to achieve a first function. The second air-receiving apparatus utilizes air to achieve a second function. The first function and the second function include, for example, vehicle height adjustment, seat position adjustment, horn activation, valve control and the like.

In this example, the first air-receiving apparatus and the second air-receiving apparatus share an air storage apparatus 8, which significantly reduces a total volume of the integrated adjustment system, saves interior space of the vehicle, and reduces costs of the vehicle.

In one example, the first air-receiving apparatus is one of a suspension apparatus, a seat adjustment apparatus, and a tire inflation apparatus; and the second air-receiving apparatus is one of a suspension apparatus, a seat adjustment apparatus, and a tire inflation apparatus.

In this example, the air storage apparatus 8 can supply air to the at least one of the suspension apparatus, the seat adjustment apparatus, and the tire inflation apparatus. Certainly, the first air-receiving apparatus and the second air-receiving apparatus are not limited to the above embodiments, and may also be other apparatuses of the vehicle that require air which may be provided by those skilled in the art according to actual needs.

The seat adjustment apparatus is configured to adjust the side wing of the seat to adjust a posture of a passenger when the vehicle is turning, reduce a tilt of the passenger and improve driving experience. The suspension apparatus is configured to adjust a height of the vehicle body according to a road condition to ensure trafficability of the vehicle, and reduce wind resistance of the vehicle and the like.

For example, the air storage apparatus 8 is configured to store and supply high-pressure air for use by the seat adjustment apparatus and the suspension apparatus. Pressure of air is set according to actual needs.

Certainly, those skilled in the art may provide the air storage apparatus 8 according to actual needs without being limited to the above embodiments.

The seat adjustment apparatus and the suspension apparatus both provide a support force through high-pressure air to adjust the seat and the vehicle body, respectively.

The seat adjustment apparatus includes an airbag. The airbag abuts against the seat (for example, the side wing of the seat). After being inflated, the airbag expands in volume and squeezes the seat, so that the shape of the seat changes. After being deflated, the airbag is reduced in volume and no longer squeezes the seat, so that the seat returns to an original status. For example, the airbag includes a left side wing airbag 13 corresponding to a position of a left side wing of the seat and a right side wing airbag corresponding to a position of a right side wing of the seat.

The suspension apparatus includes an air spring 5. The air spring 5 expands in volume as air pressure increases to provide a force to raise the vehicle body, thereby raising the height of the vehicle body. As the air pressure decreases, the height of the vehicle body is gradually lowered.

In the prior art, in order to supply air to the airbag, it is usually necessary to independently provide an air compressor 3. The air compressor 3 is connected to the airbag. In order to supply air to the air spring 5, it is usually necessary to independently provide an air compressor 3, where the air compressor 3 is connected to the air spring 5; or independently provide an air compressor 3 and an air storage tank, where the air compressor 3 supplies air to the air storage tank, and the air storage tank provides high-pressure air to the air spring 5. Two air compressors 3 and air storage tanks greatly increase the volumes of two systems, occupying the interior space of the vehicle.

The tire inflation apparatus is configured to inflate tires of the vehicle. For example, the tire inflation apparatus includes an inflation pipeline and a wheel side valve, and the inflation pipeline is connected to the wheel side valve. The inflation pipeline is connected to the air storage apparatus 8. The wheel side valve is configured to control a tire valve to be turned on or off.

Under the condition that one of the first air-receiving apparatus and the second air-receiving apparatus is a seat adjustment apparatus and the other of the first air-receiving apparatus and the second air-receiving apparatus is a suspension apparatus, the seat adjustment apparatus and the suspension apparatus share an air storage apparatus 8, which significantly reduces the total volume of the integrated adjustment system, saves the interior space of the vehicle, and reduces the costs of the vehicle.

Furthermore, the frequency of use of the suspension apparatus is much lower than that of the seat adjustment apparatus. The integrated adjustment apparatus can ensure a high frequency of use of the air storage apparatus 8, thereby avoiding idle loss of the air storage apparatus 8 due to prolonged non-use.

In addition, the suspension apparatus usually adjusts the height of the vehicle body when the vehicle is static or adjusts the height of the vehicle body as the vehicle speed changes when the vehicle is traveling in a straight line. The seat adjustment apparatus is usually used when the vehicle is turning. Therefore, functions of the suspension apparatus and the seat adjustment apparatus do not overlap in terms of usage time, thereby maximizing the use of the air storage apparatus 8.

In addition, because operations of the suspension apparatus and the seat adjustment apparatus are both related to a motion status of the vehicle, control of the suspension apparatus and the seat adjustment apparatus may achieve coordinated control of a plurality of functional modules (such as a plurality of solenoid valves and pressure sensors) through a control apparatus, thereby better scheduling the resources of the control apparatus and coordinating the control strategy.

In addition, because the suspension apparatus and the seat adjustment apparatus are both triggered and controlled based on a position status and an acceleration status of the vehicle, a vehicle signal only needs to be sent once instead of a plurality of times, which further saves the computing resources of a vehicle control apparatus and improves the operating efficiency of a vehicle system.

In addition, because two systems may be controlled by a control apparatus, for example, the function of the seat adjustment apparatus may be integrated into the control apparatus of the suspension apparatus, there is no need to provide two independent control apparatuses, which can further save the costs of the vehicle.

In one example, in a first state, the air storage apparatus 8 is configured to supply air to the first air-receiving apparatus; in a second state, the air storage apparatus 8 is configured to supply air to the second air-receiving apparatus; and in a third state, the air storage apparatus 8 is configured to supply air to the first air-receiving apparatus and the second air-receiving apparatus.

In this example, a plurality of air supply modes of the air storage apparatus 8 can be realized by controlling different working conditions.

In one example, as shown in FIG. 1, the first air-receiving apparatus is a suspension apparatus, the second air-receiving apparatus is a seat adjustment apparatus, the air storage apparatus supplies air to the first air-receiving apparatus through a first pipeline 100, the air storage apparatus supplies air to the second air-receiving apparatus through a second pipeline 200, and a distribution valve is provided between the air storage apparatus and the suspension apparatus.

For example, the distribution valve 6 may be, but is not limited to, a solenoid valve, a pneumatic valve, and the like. By controlling the distribution valve 6 to be turned on or off, an air source is controlled to supply air to the air storage apparatus 8, and the air storage apparatus is controlled to supply air to the suspension apparatus, and the like.

Those skilled in the art may set a number, a position, a pressure level, and the like of various valves in the distribution valve 6 according to a number of air springs 5 in the suspension apparatus.

In one example, as shown in FIG. 1, the second pipeline 200 is provided with a pressure-limiting valve group. The pressure-limiting valve group is configured to adjust pressure of air entering the seat adjustment apparatus to meet the air pressure requirements of the seat adjustment apparatus.

Those skilled in the art may select a specification of the pressure-limiting valve group according to air pressure of the air storage apparatus 8 and working pressure of the seat adjustment apparatus.

As shown in FIG. 1, the pressure-limiting valve group includes a first pressure-limiting valve 9 and a second pressure-limiting valve 19. The first pressure-limiting valve 9 is disposed on the second pipeline 200. The second pipeline 200 includes an exhaust branch pipe 200b. The second pressure-limiting valve 19 is disposed on the exhaust branch pipe 200b.

In this example, the air pressure of the air storage apparatus 8 is higher than the working pressure of the seat adjustment apparatus. In order to match with the working pressure of the seat adjustment apparatus, the first pressure-limiting valve 9 is disposed on the second pipeline 200. Those skilled in the art may select a specification of the first pressure-limiting valve 9 based on the air pressure of the air storage apparatus 8 and the working pressure of the seat adjustment apparatus. The exhaust branch pipe 200b is configured to allow the second pipeline 200 to exhaust air. For example, the second pressure-limiting valve 19 is a solenoid valve or a pneumatic valve. When the second pipeline 200 exhausts air, the second pressure-limiting valve 19 is turned on, so that air in the airbag can be exhausted quickly. The method of disposing the second pressure-limiting valve 19 on the second pipeline 200 to exhaust air enables faster exhaustion.

In addition, because the exhaust branch pipe and the second pressure-limiting valve 19 are provided, when the first pressure-limiting valve 9 fails, high-pressure air can also be released through the second pressure-limiting valve 19 to prevent excessive air pressure from damaging the seat adjustment apparatus.

In one example, as shown in FIG. 1, the integrated adjustment apparatus further includes: an air generation apparatus. The air generation apparatus is connected to the first pipeline 100, and the air generation apparatus is configured to supply air to the air storage apparatus 8 and/or the suspension apparatus.

The air in the air storage apparatus 8 may be, but is not limited to, air, nitrogen, inert gas, and the like. The air generation apparatus includes an air compressor 3, a nitrogen compressor, an inert gas compressor, and the like. The air generation apparatus may also be a nitrogen generator. The nitrogen generator is configured to prepare nitrogen. The air generation apparatus may further include a nitrogen generator and a nitrogen compressor. The nitrogen compressor is configured to pressurize nitrogen prepared by the nitrogen generator and supply the nitrogen to the air storage apparatus 8.

Certainly, those skilled in the art may provide the air generation apparatus according to actual needs without being limited to the above embodiments.

The air compressor 3 is taken as an example for explanation. In one example, as shown in FIG. 1, the air generation apparatus includes an air intake pipe. An inlet of the air intake pipe is adapted to draw air from a vehicle cabin. For example, the vehicle cabin includes a cockpit and a luggage compartment.

For example, air from the air compressor 3 enters the air compressor 3 through the air intake pipe. In this example, the inlet of the air intake pipe is provided in the vehicle cabin. Usually, an external environment of the vehicle is complex. For example, the quality of air in the external environment is inconsistent, such as a high dust content, a high humidity, a high content of toxic and harmful substances, and the like. If the inlet of the air intake pipe is disposed outside the vehicle, this may cause damage to the air compressor 3 and the air spring 5.

However, the air in the vehicle cabin is usually filtered by an air filter of the vehicle. Therefore, the quality of the air is consistent, and the content of harmful components is low. In this example, the inlet of the air intake pipe is disposed in the vehicle cabin to avoid damage to the air compressor 3, the suspension apparatus or the air storage apparatus 8 due to the poor quality of air.

The air intake pipe is provided with a filter, and the filter can filter air entering the air compressor 3, thereby further ensuring that the quality of the air entering the air compressor 3 is good.

In one example, as shown in FIG. 1, the air intake pipe is provided with a first one-way valve 1, and the first one-way valve 1 is configured to allow air to flow to the air generation apparatus.

A one-way valve is a valve that allows fluid to flow in a set direction but does not allow fluid to flow in the opposite direction. The first one-way valve 1 allows the air in the vehicle cabin to enter the air compressor 3 through the air intake pipe, but does not allow the air in the air intake pipe to flow back into the vehicle cabin. In this way, air from the air spring or air from the air storage apparatus 8 can be effectively prevented from entering the vehicle cabin and causing an adverse effect on an air environment of the vehicle cabin.

In one example, as shown in FIG. 1, the air generation apparatus includes an exhaust pipe. An outlet of the exhaust pipe is adapted to exhaust air to the outside of the vehicle cabin.

The exhaust pipe is configured to exhaust air in the suspension apparatus and the air storage apparatus 8 or redundant air from the air compressor 3. In this example, the outlet of the exhaust pipe is located outside the vehicle cabin. In this way, the air from the air compressor 3, the air from the suspension apparatus or the air from the air storage apparatus 8 can also be effectively prevented from entering the vehicle cabin and causing an adverse effect on an air environment of the vehicle cabin.

In one example, as shown in FIG. 1, the exhaust pipe is provided with a second one-way valve 2, and the second one-way valve 2 is configured to allow air to flow to an external environment.

The second one-way valve 2 allows the air in the air storage apparatus 8 and the suspension apparatus or the redundant air from the air compressor 3 to be exhausted to the outside of the vehicle cabin, but does not allow the air from the external environment to enter the air compressor 3, the suspension apparatus or the air storage apparatus 8. In this way, air outside the vehicle cabin can be effectively prevented from causing damage to the air compressor 3, the suspension apparatus or the air storage apparatus 8.

As shown in FIG. 1, the air generation apparatus further includes a communicating pipe 31. The exhaust pipe and the air intake pipe share a partial pipeline. One end of the communicating pipe 31 is connected to the first pipeline 100, and the other end of the communicating pipe 31 is connected to a pipeline shared by the air intake pipe and the exhaust pipe. In this way, the pipeline design can be simplified, and the interior space of the vehicle can be saved.

The communicating pipe 31 is a bypass pipeline of the air compressor 3. The communicating pipe 31 enables air from the first pipeline 100 to enter the exhaust pipe without passing through the air compressor 3. This enables the air in the air storage apparatus 8 and the suspension apparatus to be exhausted smoothly to the external environment, thereby preventing harmful substances of the air in the suspension apparatus from damaging the air compressor 3.

The communicating pipe 31 is provided with a communicating valve 32. The communicating valve 32 is a solenoid valve or a pneumatic valve. When the suspension apparatus or the air storage apparatus 8 exhausts air, the communicating valve 32 is turned on; and when the air compressor 3 works, the communicating valve 32 is turned off. The first one-way valve 1 can effectively prevent air from entering the vehicle cabin when the suspension apparatus or the air storage apparatus 8 exhausts air.

In this example, the first one-way valve 1 and the second one-way valve 2 are provided, which can automatically adjust air intake and air exhaust of the integrated adjustment system. During air intake, an external atmospheric pressure is greater than air pressure in the shared pipeline. At this time, under the action of a pressure difference, the first one-way valve 1 is automatically turned on, while the second one-way valve 2 is in an automatically turned off status because its directionality and opening conditions are not met. The air enters the air compressor 3 via the air intake pipe. During air exhausting, the air pressure in the shared pipeline is greater than the external atmospheric pressure. Under the action of a pressure difference, the second one-way valve 2 is automatically turned on, while the first one-way valve 1 is in an automatically turned off status because its directionality and opening conditions are not met. The air is exhausted via the exhaust pipe. In this way, the pipeline of the air generation apparatus can be simplified.

In one example, the suspension apparatus includes a plurality of air springs 5. The distribution valve 6 includes an air storage apparatus solenoid valve 7 and a plurality of air spring solenoid valves 4. The air spring solenoid valves 4 and the air springs 5 are in a one-to-one correspondence. The air storage apparatus solenoid valve 7 and the plurality of air spring solenoid valves 4 are located on the first pipeline 100, and the air storage apparatus solenoid valve 7 is located between the air spring solenoid valve 4 and the air storage apparatus 8.

For example, a plurality of air springs 5 are distributed at different positions of the vehicle body. For example, the positions of the air springs 5 correspond to the positions of the wheels. This allows the height of the vehicle body to be adjusted more smoothly and more uniformly. Each of the air springs 5 is controlled by an air spring solenoid valve 4 for air intake, air exhaust and pressure maintenance. The air storage apparatus solenoid valve 7 is configured to control air supply, air exhaust and pressure maintenance of the air storage apparatus 8.

When the air storage apparatus 8 is inflated, the air compressor 3 is turned on, the communicating valve 32 and the plurality of air spring solenoid valves 4 are turned off, and the air storage apparatus solenoid valve 7 is turned on. The air enters the air compressor 3 via the air intake pipe. The air compressed by the air compressor 3 is inflated into the air storage apparatus 8 via the first pipeline 100.

When the air pressure in the air storage apparatus 8 reaches a set pressure, the air storage apparatus solenoid valve 7 is turned off, and the air compressor 3 is turned off, so that the air storage apparatus 8 performs pressure maintenance.

When the height of the vehicle body needs to be raised, the communicating valve 32 is turned off, and the air spring solenoid valve 4 and the air storage apparatus solenoid valve 7 are turned on. The high-pressure air in the air storage apparatus 8 enters the air spring 5 via the first pipeline 100 to raise the height of the vehicle body.

When the height of the vehicle body needs to be lowered, the air storage apparatus solenoid valve 7 is turned off, and the air spring solenoid valve 4 and the communicating valve 32 are turned on. The air in the air spring 5 is exhausted from the exhaust pipe.

The plurality of air spring solenoid valves 4 and the air storage apparatus solenoid valve 7 form an assembly, allowing the integration of the suspension apparatus to be higher and the installation and disassembly of the suspension apparatus to be easier.

In one example, as shown in FIG. 1, the second pipeline 200 is provided with an air pressure adjustment valve group, and the air pressure adjustment valve group is configured to adjust air pressure of the seat adjustment apparatus. The seat adjustment apparatus includes an airbag. Inflation, air exhaustion and pressure maintenance of the airbag are controlled by the air pressure adjustment valve group.

The air pressure adjustment valve group includes a first valve and a second valve. The first valve is provided with a first end, a second end and a third end. The first end is connected to the air supply apparatus. The second end is connected to the seat adjustment apparatus. The third end is connected to an exhaust pipe. The second valve is disposed on the exhaust pipe to control the exhaust pipe to be turned on or off. The first end, the second end and the third end are selectively in communication with each other in pairs.

The first valve can control air intake of the airbag. The second valve is configured to control air exhaustion of the airbag. The first valve and the second valve are solenoid valves, pneumatic valves, and the like. As shown in FIG. 1, the first valve is an air intake solenoid valve 11, and the second valve is an exhaust solenoid valve 14. The seat adjustment apparatus includes a driver seat adjustment mechanism and a passenger seat adjustment mechanism. The second pipeline 200 is provided with a driver control valve 10 and a passenger control valve 20 to control air paths of the driver seat adjustment mechanism and the passenger seat adjustment mechanism, respectively. Certainly, the driver control valve 10 and the passenger control valve 20 may not be provided to simplify the seat adjustment apparatus.

The driver seat adjustment mechanism and the passenger seat adjustment mechanism both include airbags. For example, the airbag includes a left side wing airbag 13 corresponding to a position of a left side wing of the seat and a right side wing airbag corresponding to a position of a right side wing of the seat. The left side wing airbag 13 and the right side wing airbag adjust the angle, height, and the like of the left side wing and the right side wing of the seat, respectively, thereby reducing the body tilt of the passenger.

The left side wing airbag 13 of the driver seat adjustment mechanism is taken as an example for description. When the vehicle turns right, the passenger tilts to the left. At this time, the driver control valve 10 and the air intake solenoid valve 11 are turned on, and the exhaust solenoid valve 14 is turned off. The high-pressure air in the air storage apparatus 8 reaches the left side wing airbag 13 via the first pressure-limiting valve 9, the driver control valve 10, and the air intake solenoid valve 11. The left side wing airbag 13 expands after being inflated, thereby changing the angle of the left side wing to support the passenger and reduce the tilt of the passenger to the left. When the air pressure in the left side wing airbag 13 reaches a set value, the air intake solenoid valve 11 is turned off, and the left side wing airbag 13 performs pressure maintenance. When the vehicle turns to go straight, the driver returns to an upright sitting position. At this time, the exhaust solenoid valve 14 is turned on to exhaust air of the left side wing airbag 13. The left side wing airbag 13 is reduced in volume, and the left side wing returns to an original status.

In this example, this structure of the first valve can simplify the connection method of the second valve, facilitating the assembly and disassembly of the seat adjustment apparatus. In one example, as shown in FIG. 1, the seat adjustment apparatus further includes a pressure sensor 12. The pressure sensor 12 is disposed on the second pipeline 200. The pressure sensor 12 is configured to sense the air pressure of the airbag.

As mentioned above, when the air pressure in the left side wing airbag 13 reaches a set value, the air intake solenoid valve 11 is turned off, and the left side wing airbag 13 performs pressure maintenance. The pressure sensor 12 can effectively monitor the air pressure in the left side wing airbag 13, thereby providing a basis for turning on or off various valves.

In one example, the integrated control system further includes a control apparatus. The control apparatus is configured to control inflation, air exhaust and pressure maintenance of the suspension apparatus, the air storage apparatus 8 and the seat adjustment apparatus.

For example, a control apparatus can be a controller, such as a controller of a vehicle, or a dedicated controller for an integrated adjustment apparatus. The controller can control the air spring solenoid valve 4, the air storage apparatus solenoid valve 7, the driver control valve 10, the passenger control valve 20, the air intake solenoid valve 11, the exhaust solenoid valve 14, the communicating valve 32, and the second pressure-limiting valve 19 to be turned on or off.

In one example, the air supply apparatus is provided with a backup interface. The backup interface is configured to be connected to other devices than the first air-receiving apparatus and the second air-receiving apparatus. For example, the other devices may be, but is not limited to, an air dust removal device and an air pump outside the vehicle, and the like. In this example, the backup interface may supply air to other devices, thereby meeting various air demands.

According to another embodiment of this application, a vehicle is provided. The vehicle includes the integrated adjustment system described above.

The vehicle features high integration, enabling the seat to be adjusted and the height of the vehicle body to be adjusted.
(1) Adjustment of the height of the vehicle body in a static state: is used to automatically adjust the height of the vehicle body according to a number of passengers in the vehicle or mass of the vehicle, so as to maintain a required height for the vehicle in a traveling process and stability of a traveling status of the vehicle. The adjustment of the height of the vehicle body may refer to the adjustment of the height of the air springs 5 corresponding to all wheels of the vehicle; or only the adjustment of the height of the air spring 5 corresponding to one wheel.

The working condition of the adjustment of the height of the air springs 5 corresponding to all wheels of the vehicle is as follows: when the vehicle body needs to be raised, the communicating valve 32 is turned off, four air spring solenoid valves 4 in the distribution valve 6 corresponding to the air springs 5 and the air storage apparatus solenoid valve 7 corresponding to the air storage apparatus 8 are turned on, and the high-pressure air in the air storage apparatus 8 enters the four air springs 5, thereby raising the height of the vehicle body. When the vehicle body needs to be lowered, the air storage apparatus solenoid valve 7 is turned off. The communicating valve 32 is turned on, and the air in the air spring 5 is exhausted to the outside of the cockpit via the second one-way valve 2.

The working condition of the adjustment of the height of the air spring 5 corresponding to a wheel is as follows: the air spring solenoid valve 4 and the air storage apparatus solenoid valve 7 corresponding to the wheel to be raised are turned on. At this time, the high-pressure air in the air storage apparatus 8 enters the air spring 5 corresponding to the air spring solenoid valve 4, and the air spring 5 extends, thereby raising the partial vehicle body corresponding to the wheel. When the vehicle body needs to be lowered, the air storage apparatus solenoid valve 7 is turned off. The communicating valve 32 is turned on, and the air in the air spring 5 is exhausted to the outside of the cockpit via the air spring solenoid valve 4, the communicating valve 32, and the second one-way valve 2.

(2) Control of the height of the vehicle body during traveling of the vehicle: used to improve directional stability of the vehicle traveling at a high speed. Upon determining that a speed of the vehicle traveling in a straight line reaches or exceeds the set speed, the controller sends a control signal to increase a damping force of an electronically controlled shock absorber. At the same time, the controller controls the distribution valve 6 to exhaust air of the air spring 5 to lower the height of the vehicle body, thereby reducing the wind resistance, lowering the center of gravity of the vehicle body, and improving handling stability when the vehicle travels at a high speed. At this time, the communicating valve 32 and all the air spring solenoid valves 4 are turned on, and the air in the air spring 5 is exhausted to the outside of the cockpit via the air spring solenoid valve 4, the communicating valve 32, and the second one-way valve 2 to lower the height of the vehicle body.

When the speed of the vehicle traveling in a straight line drops below the set speed, the communicating valve 32 is turned off, and the air storage apparatus solenoid valve 7 and all the air spring solenoid valves 4 are turned on to re-inflate the four air springs 5, thereby raising the height of the vehicle body.

(3) Overload protection of the suspension apparatus: used to set maximum allowable air pressure of the suspension apparatus in an ECU. If the air pressure of the air spring 5 is greater than or equal to the maximum allowable air pressure, the air spring 5 is deflated, and the height of the vehicle body is lowered. At this time, the communicating valve 32 and all the air spring solenoid valves 4 are turned on, and the air in the air spring 5 is exhausted to the outside of the cockpit via the air spring solenoid valve 4, the communicating valve 32, and the second one-way valve 2 to lower the height of the vehicle body.

If the vehicle needs to return to a normal status, for example, the air pressure of the air spring 5 is less than the maximum allowable air pressure, a load capacity of the vehicle needs to be reduced, for example, the overloaded cargo is unloaded. When the air pressure of the air spring 5 is lower than the maximum allowable air pressure, the vehicle is restarted, and the vehicle returns to the normal status.

(4) Turning support for the side wing of the seat: used to improve lateral stability of the passenger in the vehicle with respect to the seat when the vehicle body is subjected to a lateral force. When the vehicle is turning, for example, when at least one of the lateral acceleration, the roll angle and the roll angular velocity is greater than or equal to a set value, the driver control valve 10 and the corresponding air intake solenoid valve 11 are turned on, and the exhaust solenoid valve 14 is turned off. The high-pressure air in the air storage apparatus 8 enters the airbag, such as the left side wing airbag 13, via the first pressure-limiting valve 9, the driver control valve 10 and the corresponding air intake solenoid valve 11 to support the waist of the passenger and prevent the passenger from tilting; and when the at least one of the lateral acceleration, the roll angle or the roll angular velocity of the vehicle is less than the set value, the air intake solenoid valve 11 is turned off, the exhaust solenoid valve 14 is turned on, the air in the airbag (such as the left side wing airbag 13) is exhausted to the outside of the cockpit, and the left side wing of the seat no longer plays a supporting role.

It should be noted that in each of the usage modes described above, the controller controls different valves to be turned on or off. When the suspension apparatus is working, the air storage apparatus 8 only supplies air to the suspension apparatus and stops supplying air to the seat adjustment apparatus; and when the seat adjustment apparatus is working, the air storage apparatus 8 only supplies air to the seat adjustment apparatus and stops supplying air to the suspension apparatus to prevent the air pressure in the air storage apparatus 8 from being too low.

According to yet another embodiment of this application, a vehicle is provided. The vehicle includes the integrated adjustment system described above. The second pipeline 200 is provided with a first pressure-limiting valve 9. The seat adjustment apparatus includes an airbag. The airbag is located behind a side wing of the seat. The airbag is connected to the second pipeline 200. The second pipeline 200 is provided with a first valve and a second valve. The first valve can control air intake of the airbag, and the second valve is configured to control air exhaust of the airbag.

The first pressure-limiting valve 9 and the first valve are configured to be turned on when a signal that a vehicle is turning is obtained, in order to inflate the airbag behind the side wing on a tilted side.

In this example, the first valve is an air intake solenoid valve 11, and the second valve is an exhaust solenoid valve 14. When the vehicle turns right, the body of the passenger tilts to the left. After obtaining a signal that the vehicle turns right, the controller sends a control signal to turn on the driver control valve 10 and the corresponding air intake solenoid valve 11 and turn off the exhaust solenoid valve 14. The high-pressure air in the air storage apparatus 8 enters the airbag, such as the left side wing airbag 13, via the first pressure-limiting valve 9, the driver control valve 10 and the corresponding air intake solenoid valve 11 to support the waist of the passenger and prevent the passenger from tilting.

In one example, the second valve is configured to be turned on when a signal that the vehicle is no longer turning is obtained.

For example, when a signal that the vehicle is moving straight or stops is obtained, the controller sends a control signal to turn on the exhaust solenoid valve 14, allowing the left side wing airbag 13 to exhaust air and the left side wing to return to an original status.

The signal includes at least one of lateral acceleration, a roll angle or roll angular velocity. The above signal enables the controller to accurately determine the state of the vehicle and precisely control the operation of the integrated adjustment system.

In the description of the present disclosure, it should be understood that the directional or positional relationships indicated by the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like are based on the directional or positional relationships shown in the drawings, which is only for the purpose of facilitating the description of the present disclosure and simplifying the description, and is not intended to indicate or imply that the apparatuses or elements referred to must have specific directions, be constructed and operated in specific directions. Therefore, these terms should not be construed as limiting the present disclosure.

Furthermore, the terms "first" and "second" are used for descriptive purposes only and should not be construed as indicating or implying the relative importance or implicitly indicating the number of the indicated technical features. Thus, features defined with "first" or "second" may explicitly or implicitly include one or more of such features. In the description of the present disclosure, "a plurality of" means more than two, unless otherwise clearly and specifically defined.

In the present disclosure, unless otherwise clearly specified and defined, the terms "install", "interconnect", "connect", "fix", and the like should be interpreted in their broad senses. For example, the elements may be fixedly connected, detachably connected, or integrally connected; mechanically connected or electrically connected; and directly connected, indirectly connected through an intermediary medium, communicated between interiors of two elements, or interacted between two elements. For those skilled in the art, the specific meanings of the above terms in the present disclosure may be interpreted according to the specific condition.

In the present disclosure, unless clearly specified and defined otherwise, the description that a first feature is "above" or "below" a second feature may indicate direct contact between the first feature and the second feature, or indirect contact between the first feature and the second feature through an intermediary medium. Moreover, the description that the first feature is "above", "over" or "on" the second feature may indicate that the first feature is directly above or obliquely above the second feature, or simply indicate that the first feature is at a higher horizontal level than the second feature. The description that the first feature is "below", "beneath" or "under" the second feature may indicate that the first feature is directly below or obliquely below the second feature, or simply indicate that the first feature is at a lower horizontal level than the second feature.

In the description of this specification, the descriptions referring to the terms "one embodiment", "some embodiments", "an example", "a specific example", or "some examples" and the like mean that the specific features, structures, materials, or characteristics described in conjunction with the embodiment or example are included in at least one embodiment or example of the present disclosure. In this specification, the illustrative expressions of the above terms do not necessarily refer to the same embodiment or example. Furthermore, the specific features, structures, materials, or characteristics described may be combined in a suitable manner in any one or more embodiments or examples. In addition, without contradiction to each other, those skilled in the art may combine and integrate different embodiments or examples described in this specification, as well as the features of different embodiments or examples.

Although the embodiments of the present disclosure have been shown and described above, it should be understood that the above embodiments are exemplary and should not be construed as limiting the present disclosure. Those skilled in the art may make changes, modifications, substitutions, and variations to the above embodiments within the scope of the present disclosure.

## Claims

1. An integrated adjustment system, wherein the integrated adjustment system is applied to a vehicle, and the integrated adjustment system comprises:
a first air-receiving apparatus and a second air-receiving apparatus, wherein the first air-receiving apparatus is configured to achieve a first function, the second air-receiving apparatus is configured to achieve a second function, and the first function is different from the second function; and
an air storage apparatus, wherein the air storage apparatus is connected to the first air-receiving apparatus to supply air to the first air-receiving apparatus, and the air storage apparatus is connected to the second air-receiving apparatus to supply air to the second air-receiving apparatus.

2. The integrated adjustment system according to claim 1, wherein the first air-receiving apparatus is one of a suspension apparatus, a seat adjustment apparatus, and a tire inflation apparatus; and
the second air-receiving apparatus is one of a suspension apparatus, a seat adjustment apparatus, and a tire inflation apparatus.

3. The integrated adjustment system according to claim 1 or 2, wherein in a first state, the air storage apparatus is configured to supply air to the first air-receiving apparatus;
in a second state, the air storage apparatus is configured to supply air to the second air-receiving apparatus; and
in a third state, the air storage apparatus is configured to supply air to the first air-receiving apparatus and the second air-receiving apparatus.

4. The integrated adjustment system according to claim 1, wherein the first air-receiving apparatus is a suspension apparatus, the second air-receiving apparatus is a seat adjustment apparatus, the air storage apparatus supplies air to the first air-receiving apparatus through a first pipeline, the air storage apparatus supplies air to the second air-receiving apparatus through a second pipeline, and a distribution valve (6) is provided between the air storage apparatus and the suspension apparatus.

5. The integrated adjustment system according to claim 4, wherein the second pipeline (200) is provided with a pressure-limiting valve group, and the pressure-limiting valve group is configured to adjust pressure of air entering the seat adjustment apparatus.

6. The integrated adjustment system according to claim 5, wherein the pressure-limiting valve group comprises a first pressure-limiting valve and a second pressure-limiting valve, the first pressure-limiting valve is disposed on the second pipeline, the second pipeline comprises an exhaust branch pipe, and the second pressure-limiting valve is disposed on the exhaust branch pipe.

7. The integrated adjustment system according to any one of claims 4 to 6, further comprising: an air generation apparatus, wherein the air generation apparatus is connected to the first pipeline (100), and the air generation apparatus is configured to supply air to the air storage apparatus (8) and/or the suspension apparatus.

8. The integrated adjustment system according to claim 7, wherein the air generation apparatus comprises an air intake pipe, and an inlet of the air intake pipe is adapted to draw air from a vehicle cabin.

9. The integrated adjustment system according to claim 8, wherein the air intake pipe is provided with a first one-way valve (1), and the first one-way valve (1) is configured to allow air to flow to the air generation apparatus.

10. The integrated adjustment system according to any one of claims 7 to 9, wherein the air generation apparatus comprises an exhaust pipe, and an outlet of the exhaust pipe is adapted to exhaust air to the outside of the vehicle cabin.

11. The integrated adjustment system according to claim 10, wherein the exhaust pipe is provided with a second one-way valve (2), and the second one-way valve (2) is configured to allow air to flow to an external environment.

12. The integrated adjustment system according to claim 7, wherein the air generation apparatus comprises an air intake pipe, an exhaust pipe and a communicating pipe (31), the air intake pipe and the exhaust pipe share a partial pipeline, one end of the communicating pipe (31) is connected to the first pipeline, and the other end of the communicating pipe (31) is connected to the pipeline shared by the air intake pipe and the exhaust pipe.

13. The integrated adjustment system according to any one of claims 4 to 12, wherein the suspension apparatus comprises a plurality of air springs (5), the distribution valve (6) comprises an air storage apparatus solenoid valve (7) and a plurality of air spring solenoid valves (4), the air spring solenoid valves (4) and the air springs (5) are in a one-to-one correspondence, the air storage apparatus solenoid valve (7) and the plurality of air spring solenoid valves (4) are located on the first pipeline (100), and the air storage apparatus solenoid valve (7) is located between the air spring solenoid valve (4) and the air storage apparatus (8).

14. The integrated adjustment system according to any one of claims 4 to 13, wherein the second pipeline is provided with an air pressure adjustment valve group, and the air pressure adjustment valve group is configured to adjust air pressure of the seat adjustment apparatus.

15. The integrated adjustment system according to claim 14, wherein the air pressure adjustment valve group comprises a first valve and a second valve, the first valve is provided with a first end, a second end and a third end, the first end is connected to the air storage apparatus, the second end is connected to the seat adjustment apparatus, the third end is connected to an exhaust pipe, the second valve is disposed on the exhaust pipe to control the exhaust pipe to be turned on or off, and the first end, the second end and the third end are selectively in communication with each other in pairs.

16. The integrated adjustment system according to any one of claims 1 to 15, wherein the air storage apparatus is provided with a backup interface.

17. A vehicle, comprising the integrated adjustment system according to any one of claims 1 to 16.

18. A vehicle, comprising the integrated adjustment system according to any one of claims 4 to 15, wherein the second pipeline is provided with a first pressure-limiting valve, the seat adjustment apparatus comprises an airbag, the airbag is located behind a side wing of the seat, the airbag is connected to the second pipeline, the second pipeline is provided with a first valve and a second valve, the first valve is configured to control air intake of the airbag, and the second valve is configured to control air exhaust of the airbag; and
the first pressure-limiting valve and the first valve are configured to be turned on when a signal that a vehicle is turning is obtained, in order to inflate the airbag behind the side wing on a tilted side.

19. The vehicle according to claim 18, wherein the second valve is configured to be turned on when a signal that the vehicle is no longer turning is obtained

20. The vehicle according to either of claims 18 and 19, wherein the signal comprises at least one of lateral acceleration, a roll angle or roll angular velocity.

21. The vehicle according to either of claims 18 and 19, wherein the airbag comprises a left side wing airbag corresponding to a position of a left side wing of the seat and a right side wing airbag corresponding to a position of a right side wing of the seat.
